# EUROPEAN PATENT APPLICATION

(11) **EP 2 977 270 A1**
(43) Date of publication of application: **27.01.2016**
(21) Application number: 14465514.9
(22) Date of filing: 24.07.2014
(51) Int. Cl.: B60R 11/00

(54) **Multi-use bracket for mounting components onto a windshield of a vehicle**

(71) Applicant: Continental Automotive GmbH, 30165 Hannover (DE)
(72) Inventor: Gheorghe, Lucian, 300440 Timisoara (RO); Lapugean, Alexandru, 300730 Timisoara, Jud. Timis (RO); Alecsa, Valerian, 300386 Timisoara, Jud Timis (RO)
(74) Representative: Büchner, Jörg

(57) **Abstract**

A multi-use bracket for mounting a component onto windshields used for different vehicle types, the multi-use bracket comprising a curved baseplate (1) having standoffs (2) defining a circular inner surface area (3) surrounded by an outer surface area (4) of the curved baseplate (1), wherein a first curve radius (r₁) of the inner surface area (3) of said baseplate (1) is larger than a second curve radius (r₂) of the outer surface area (4) of said baseplate (1) to fit windshields (5) with different curvatures without touching the windshields.

## Description

The invention relates to a multi-use bracket which can be used for mounting electronic or mechanical components onto curved windshields of different vehicle types.

Windshield brackets are mechanical interfacing components which are used in the automotive industry to mount different electronic and/or mechanical components such as sensors onto a windshield of a vehicle. The design of windshield brackets is dictated by the shape, position and/or orientation of the windshield they are mounted on, as well as the particular requirements of the specific components received by the windshield bracket. One of the issues encountered in trying to mount windshield brackets onto a windshield or windscreen is its geometrical shape to allow fitting between the windshield bracket and the windshield. This is especially relevant for adjustable brackets that are intended to be the same for different carlines, because windshield shapes can vary significantly even within models of a single car manufacturer. Even for non-adjustable brackets that are built exclusively for a single car platform, the surface fitting can still be an issue because of the inherent unpredictability of the manufacturing process of the windshields.

For non-adjustable windshield brackets, one of the facts of this fitting issue is that the precision with which the sensor devices mounted on the bracket can be positioned with respect to the windscreen is deteriorated. Depending on the mounting process used there can also be problems with the gluing process between the windshield bracket and the windshield thus negatively affecting precision.

For adjustable multi-use brackets that are supposed to fit multiple different windscreens of different vehicle types, it can be the case that it is not even possible to fit all shapes if the windshield forms vary too much.

For a windshield bracket designed for a single carline, the bracket normally comprises a rigid plate with three standoffs of a certain height. The height of the standoffs determines the gap between the windshield and the bracket plate and implicitly the glue thickness. Use of such a single-use bracket theoretically allows a precise sensor device positioning relative to the windshield, however, an inherent disadvantage is the required height of the standoffs or standoff points which are increasing to compensate for large windshield waviness variations. This is done to avoid a touch point in a place or location other than the designated three standoff points which would compromise the position of the sensor device positioning. However, increasing the standoff height affects the gluing process negatively. Another way of handling waviness variations of windshields is to have a slightly flexible plate that conforms to the windshield shape. However, the disadvantage here is that a permanent pressure force is required during curing of the glue which also leads to tensions in the bracket. Moreover, the positioning of sensor devices with respect to the windscreens is less precise because it is not possible to predict the windshield shape and implicitly how the windshield bracket plate will bend.

Adjustable brackets designed for multi-use carlines which normally have a flexible bracket plate have the disadvantage of decreased sensor device positioning precision. Accordingly, if the average radius range of the windshield in the bracket area becomes too large, an adjustable bracket cannot be used because of large internal tensions in the bracket plate.

Accordingly, it is an object of the present invention to provide a multi-use bracket which allows mounting components onto curved windshields used for a plurality of different vehicle types with high precision and low mechanical tensions.

This object is achieved according to a first aspect of the present invention by a multi-use bracket comprising the features of claim 1.

Therefore, according to the first aspect of the present invention, the invention provides a multi-use bracket for mounting components onto windshields used for different vehicle types, the multi-use bracket comprising:
a curved baseplate having standoffs defining a circular inner surface area surrounded by an outer surface area of the curved baseplate,
wherein a first curve radius of the inner surface area of said baseplate is larger than a second curve radius of the outer surface area of said baseplate to fit windshields with different curvatures without touching said windshields.

In a possible embodiment of the multi-use bracket according to the first aspect of the present invention, the first curve radius of the inner surface area of said baseplate corresponds to a curve radius of a windshield with a maximum curvature and the second curve radius of the outer surface area of said baseplate corresponds to a minimum curve radius of a windshield with minimum curvature.

In a possible embodiment of the multi-use bracket according to the first aspect of the present invention, the multi-use bracket comprises a housing or casing configured to receive electronic and/or mechanical components of a vehicle.

In a possible embodiment of the multi-use bracket according to the first aspect of the present invention, the components received by the housing of the multi-use bracket comprise vehicle sensor devices.

In a further possible embodiment of the multi-use bracket according to the first aspect of the present invention, the baseplate is made of a rigid material for optimal positioning of the vehicle sensor devices.

In a further alternative embodiment of the multi-use bracket according to the first aspect of the present invention, the baseplate is made of a flexible material for optimal windshield fitting of the multi-use bracket.

In a still further possible embodiment of the multi-use bracket according to the first aspect of the present invention, the curved baseplate is adapted to be glued to a curved windshield of a vehicle with minimum pressure force and with minimum internal tensions and/or deformations.

In a still further possible embodiment of the multi-use bracket according to the first aspect of the present invention, the baseplate comprises at least three standoffs of predetermined height to provide a gap between the windshield and the baseplate of the multi-use bracket.

According to a second aspect, the invention further provides a vehicle comprising the features of claim 9.

Accordingly, the present invention provides a vehicle comprising a windshield to which a multi-use bracket is attached,
wherein the multi-use bracket is configured to mount components onto curved windshields used for different vehicle types and comprises:
a curved baseplate having standoffs defining a circular inner surface area surrounded by an outer surface area of the curved baseplate,
wherein a first curve radius of the inner surface area of said baseplate is larger than a second curve radius of the outer surface area of said baseplate to fit windshields with different curvatures.

The invention further proceeds according to a third aspect - a method for providing a multi-use bracket used for windshields of different vehicle types comprising a baseplate with standoffs to be attached to a curved windshield,
wherein the standoffs define a circular inner surface area of said baseplate surrounded by an outer surface area of said baseplate,
said method comprising:
adapting a first curve radius of the inner surface area and a second curve radius of the outer surface area of said baseplate depending on the different curvatures of the windshields of the different vehicle types.

According to a possible embodiment of the method according to the third aspect of the present invention, the first curve radius of the inner surface area of said baseplate is adapted to correspond to a curve radius of a windshield with maximum curvature and the second curve radius of the outer surface area of said baseplate is adapted to correspond to a minimum curve radius of a windshield with minimum curvature.

In a further possible embodiment of the method according to the present invention, the baseplate is formed from a rigid material for optimal positioning of vehicle sensor devices.

In a still further possible alternative embodiment of the method according to the present invention, the baseplate is formed from a flexible material for optimal windshield fitting of the multi-use bracket.

In a still further possible embodiment of the method according to the third aspect of the present invention, the curved baseplate is glued to a curved windshield of a vehicle with minimum pressure force and with minimum internal tensions and/or deformations.

In a still further possible embodiment of the method according to the third aspect of the present invention, the baseplate comprises at least three standoffs of predetermined height to provide a gap between the windshield and the baseplate of the multi-use bracket.

In the following, possible embodiments of the different aspects of the present invention are described in more detail with reference to the enclosed figures.
- Figure 1: shows a perspective view on a baseplate of a multi-use bracket according to the first aspect of the present invention;
- Figure 2, 3: show cut views for illustrating a technical problem underlying the present invention;
- Figure 4: schematically shows surface intersections for explaining the design of a multi-use bracket according to the first aspect of the present invention;
- Figure 5: shows a baseplate of a multi-use bracket according to the first aspect of the present invention mounted on a windshield with a small curvature;
- Figure 6: shows a baseplate of a multi-use bracket according to the present invention mounted on a windshield with a large curvature.

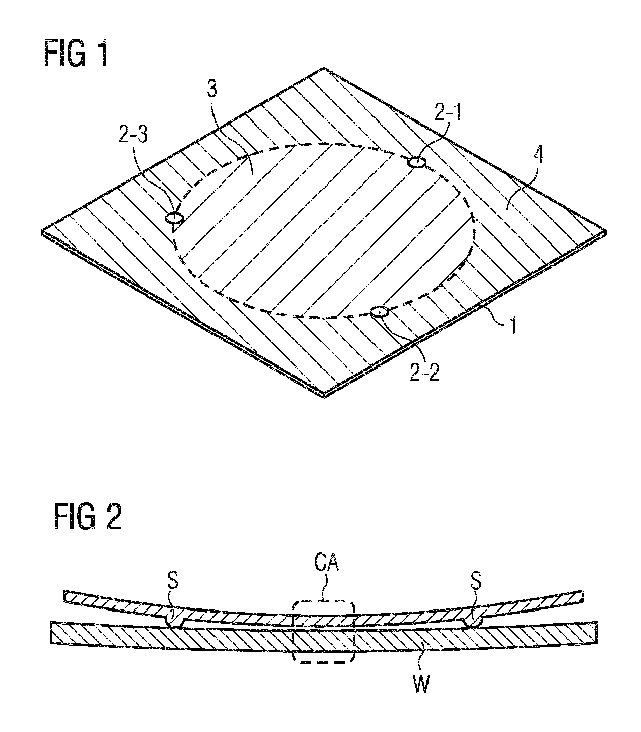

As can be seen from Figure 1, a baseplate 1 which can form part of a multi-use bracket according to the first aspect of the present invention comprises in the illustrated embodiment three standoffs 2-1, 2-2, 2-3 defining a circular inner surface area 3 surrounded by an outer surface area 4 of the baseplate 1. In the shown preferred embodiment of Figure 1, the baseplate or hybrid surface plate 1 comprises three standoffs 2-1, 2-2, 2-3. In a further possible embodiment, the number of standoffs can vary, wherein the standoffs are located on the circumference of a circle. The standoffs 2-i have a predetermined height and touch a windshield of a vehicle after mounting the multi-use bracket to the windshield. In a possible embodiment, a first curve radius r₁ of the inner surface area 3 of the baseplate 1 corresponds to a curve radius of a windshield with a maximum curvature and the second curve radius r₂ of the outer surface area 4 of said baseplate 1 corresponds to a minimum curve radius of a windshield with minimum curvature. Accordingly, the hybrid surface of the baseplate 1 combines two different radii, i.e. a larger radius inside the area of the standoffs and a smaller radius outside of the area of the standoffs 2-i. In a possible embodiment, the larger and smaller radius can be an absolute or statistical maximum and minimum of a set or subset of windscreen local average radii. In general, the two different radii can be any two different radii adapted to the curvature of the respective windshields.

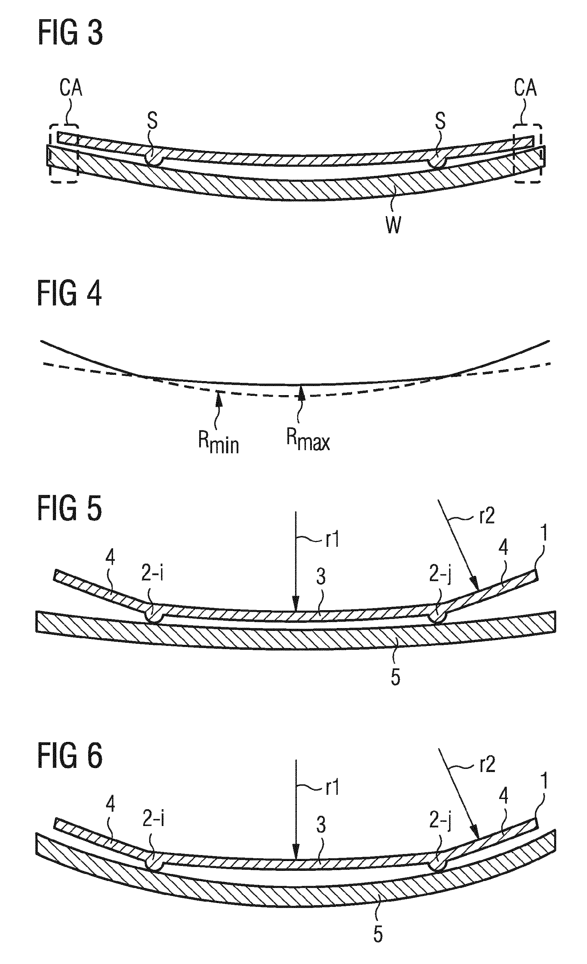

The shape of the baseplate 1 can be designed in a possible embodiment defining a worst case scenario for each area of the baseplate considering the standoff positions. As can be seen in Figure 2, the windshield W has a large curvature radius, wherein the critical area CA is inside the standoff 5. That is because the flatter the windshield W is (larger radius), the smaller the gap between the baseplate and the windshield W becomes, up to the point where direct contact will occur so that the fitting is compromised. In contrast, as illustrated in Figure 3, when the radius of the windshield W is small, the critical areas CA of the bracket will be on the outside of the standoffs S. The more curved the windshield W becomes, the closer the outside points will get, up to the point of direct contact, where the fitting of the bracket is compromised. Even before direct contact, when the gap between the baseplate and the windshield W becomes too small, a gluing process is affected negatively because of uncontrolled glue spread, bracket deformation during gluing or a risk that not all three standoffs S are in contact with the windshield W. Accordingly, the multi-use bracket of the present invention has two different surfaces as illustrated in Figure 1, i.e. a circular inner surface area 3 and a surrounding outer area 4 with different curved radii. Because of the different radii, there is an intersection between the two surfaces, as illustrated in Figure 4. Figure 4 illustrates how the surfaces intersect. To be at a safe distance from the windshield or windscreen and each area, the surface that is further away from where the windscreen would be is chosen. Accordingly, the middle area, i.e. the area inside the standoffs is the surface with the larger radius, and the area outside the standoffs is the surface with the smaller radius. The different radii can be determined statistically for a worst case from a collection of windscreen radii from different carlines or for different vehicle types. Further, the radii can be measured radii or estimations of multiple windscreens of the same or different carlines. The surface of the baseplate formed in this way has the combined benefit, as illustrated in Figures 5, 6. As can be seen in Figure 5, wherein the curvature of the windshield 5 is the flattest considered, the baseplate 1 is also the flattest in the middle and there is no touch condition. At the same time, as illustrated in Figure 6, wherein the windshield 5 is the curviest windshield, there is no touch point on the outer areas either because the baseplate 1 is also the curviest on its sides.

The baseplate 1 can be made from different materials. Depending on the specific requirements, the baseplate 1 can be either made of a rigid or flexible material. In a possible embodiment, the baseplate 1 is made of a rigid material for optimal positioning of vehicle sensor devices received in the housing of the multi-use bracket. In an alternative embodiment, the baseplate 1 can be made of a flexible material to provide for an optimal windshield fitting of the multi-use bracket. The multi-use bracket according to the present invention provides the advantage that the surface shape of its baseplate allows to fit any range of windshield shapes without touching points other than the designated standoffs 2, while still providing the ability to get as close as possible to the windscreen 5 with a minimum gap to allow an appropriate gluing surface area. The multi-use bracket can be used in any situation that requires accommodating not only a radius but a range of radii, originating from radius deviations within a single carline or radii distributions of multiple carlines. The multi-use bracket with the curved baseplate 1 as illustrated in Figure 1 can be glued on a curved windscreen 5 of a vehicle with a minimum pressure force and with minimum internal tensions and/or deformations of the baseplate. Accordingly, the gluing process can be abbreviated and the mounting process can be accelerated. Moreover, the reliability of the mechanical connection between the baseplate 1 of the multi-use bracket and the windshield 5 is increased. The multi-use bracket with the baseplate 1 as illustrated in Figure 1 can be used for a wide variety of windshields of different vehicle types and/or with different waviness of the windshields.

The invention further provides the advantage that the design of the multi-use bracket, in particular its baseplate 1, can be adapted at a later production stage to different windshields of different carlines. In a possible embodiment, the inner and outer surface area of the baseplate 1 is made of the same material, for instance a flexible material or a rigid material. In a still further possible embodiment, the inner and outer surface areas 3, 4 of the baseplate 1 can be made of different materials depending on the requirements of the components within the housing of the multi-use bracket.

REFERENCE SIGNS

## Claims

1. A multi-use bracket for mounting a component onto windshields (5) used for different vehicle types, the multi-use bracket comprising:
a curved baseplate (1) having standoffs (2) defining a circular inner surface area (3) surrounded by an outer surface area (4) of the curved baseplate (1),
wherein a first curve radius (r₁) of the inner surface area (3) of said baseplate (1) is larger than a second curve radius (r₂) of the outer surface area (4) of said baseplate (1) to fit windshields (5) with different curvatures without touching the windshields (5).

2. The multi-use bracket according to claim 1,
wherein the first curve radius (r₁) of the inner surface area (3) of said baseplate (1) corresponds to a curve radius (Rmax) of a windshield (5) with a maximum curvature and
the second curve radius (r₂) of the outer surface area (4) of said baseplate (1) corresponds to a curve radius (Rmin) of a windshield (5) with minimum curvature.

3. The multi-use bracket according to claim 1 or 2,
wherein said multi-use bracket comprises a housing configured to receive electronic and/or mechanical components of a vehicle.

4. The multi-use bracket according to claim 3,
wherein the components comprise vehicle sensor devices.

5. The multi-use bracket according to claim 4,
wherein said baseplate is made of a rigid material for optimal positioning of said vehicle sensor devices.

6. The multi-use bracket according to claim 4,
wherein said curved baseplate (1) is made of a flexible material for optimal windshield fitting of said multi-use bracket.

7. The multi-use bracket according to one of the preceding claims 1 to 6,
wherein said curved baseplate (1) is adapted to be glued to a curved windshield (5) of a vehicle with a minimum pressure force and with minimum internal tensions and/or deformations.

8. The multi-use bracket according to one of the preceding claims 1 to 7,
wherein said curved baseplate (1) comprises at least three standoffs (2) of predetermined height to provide a gap between the windshield (5) and the baseplate (1) of said multi-use bracket.

9. A vehicle comprising a windshield (1) to which a multi-use bracket according to one of the preceding claims 1 to 8 is attached.

10. A method for providing a multi-use bracket used for windshields of different vehicle types comprising a baseplate (1) with standoffs (2) to be attached to a curved windshield (5) of a vehicle,
wherein the standoffs (2) define a circular inner surface area (3) of said baseplate surrounded by an outer surface area (4) of said baseplate (1), said method comprising: adapting a first curve radius (r₁) of the inner surface area (3) and a second curve radius (r₂) of the outer surface area (4) of said baseplate (1) depending on the different curvatures of the windshields (5) of the different vehicle types.

11. The method according to claim 10,
wherein the first curve radius (r₁) of the inner surface area (3) of said baseplate (1) is adapted to correspond to a curve radius of a windshield (5) with a maximum curvature (Rmax) and wherein the second curve radius (r₂) of the outer surface area (4) of the baseplate (1) is adapted to correspond to a minimum curve radius (Rmin) of a windshield (5) with a minimum curvature.

12. The method according to claim 10 or 11,
wherein the baseplate (1) is formed of a rigid material for optimal positioning of vehicle sensor devices received by a housing of said multi-use bracket.

13. The method according to claim 11 or 12,
wherein said baseplate (1) is formed by a flexible material for optimal windshield fitting of said multi-use bracket.

14. The method according to one of the preceding claims 10 to 13,
wherein the curved baseplate (1) is glued to a curved windshield (5) of a vehicle with minimum pressure force and with minimum internal tensions and/or deformations.

15. The method according to one of the preceding claims 10 to 14,
wherein the baseplate (1) is formed with at least three standoffs (2) of predetermined height to provide a gap between the windshield (5) and the baseplate (1) of said multi-use bracket.
